# EUROPEAN PATENT SPECIFICATION

(11) **EP 2 494 140 B1**
(45) Date of publication and mention of the grant of the patent: **03.05.2017**
(21) Application number: 10834890.5
(22) Date of filing: 17.09.2010
(51) Int. Cl.: F04B 15/02, F04B 17/03, F04B 47/00, E21B 21/08, H02K 21/14, H02K 1/27, H02K 1/30, H02K 7/14

(54) **PERMANENT MAGNET DIRECT DRIVE MUD PUMP**
SCHLAMMPUMPE MIT PERMANENTMAGNET-DIREKTANTRIEB
POMPE À BOUE À ENTRAÎNEMENT DIRECT À AIMANT PERMANENT

(30) Priority: 02.12.2009 US 629354
(43) Date of publication of application: 05.09.2012
(73) Proprietor: Williams, Kevin R., Cypress, TX 77410-1359 (US)
(72) Inventor: Williams, Kevin R., Cypress, TX 77410-1359 (US)
(74) Representative: Prüfer & Partner mbB Patentanwälte · Rechtsanwälte
(86) International application number: PCT/US2010/049236
(87) International publication number: WO 2011/068581

(56) References cited:
- WO-A1-89/08941
- US-A1- 2006 043 811
- US-A1- 2006 108 890
- US-A1- 2007 053 780
- US-A1- 2008 061 645
- US-A1- 2008 181 798
- US-A1- 2008 267 785

## Description

### FIELD OF THE INVENTION

The present invention relates to oil field equipment. More particularly, the present invention the relates to a mud pump used in oil and gas drilling and production. More particularly, the present invention relates to a mud pump having a permanent magnet motor.

### BACKGROUND OF THE INVENTION

Mud pumps are commonly used in drilling a wellbore for oil and gas wells in order to lubricate the drilling equipment (e.g. drillstring and drill bit). The mud pump is commonly located at the surface of the well near the oil and gas derrick. A typical mud pump has an inlet that is cooperative with a mud pit. An outlet of the mud pump is connected with the drillstring so as to supply a flow of mud (or other lubricating fluid) to the drill bit located at the bottom of the wellbore. The mud travels within the drillstring to the drill bit, where the mud exits the drillstring and is recycled upwardly to the surface of the well and into the mud pit. During recycle, the mud travels in the annular space between the drillstring and the walls of the wellbore.

Drilling fluid, such as mud, can serve many purposes, such as providing hydrostatic pressure deep within the wellbore so that production fluids (i.e. oil and gas) remain within the formation during drilling of the wellbore. In addition to lubricating the drillstring and drill bit while drilling, the pressurized mud pumped into the drillstring by the mud pump can be used to power the drill bit.

Prior art mud pumps are relatively complex, heavy, and can have a large footprint. A typical pump has a pump head, a power source, and a coupling mechanism connecting the head and the power source. The coupling mechanism can be a shaft and transmission or any other mechanically suitable means for transmitting power from the power source to the pump head.

Pump heads, power sources, and the coupling mechanism vary in complexity. For mud pumps, reciprocating pump heads can be used to pump mud for oil and gas drilling. Reciprocating pump heads have pistons that reciprocate in cylinders. A reciprocating pump head can have any number of piston-and-cylinder arrangements. The power source can be a variable speed AC motor, a DC motor, a diesel/gasoline engine, or a hydraulic motor. Two or more mud pumps having power ratings of more than 750 hp are commonly used to pump mud while drilling. The mud that is pumped can be a mixture of mud, water, oil, and other materials. The lubricating fluids used for drilling are collectively referred to as "mud."

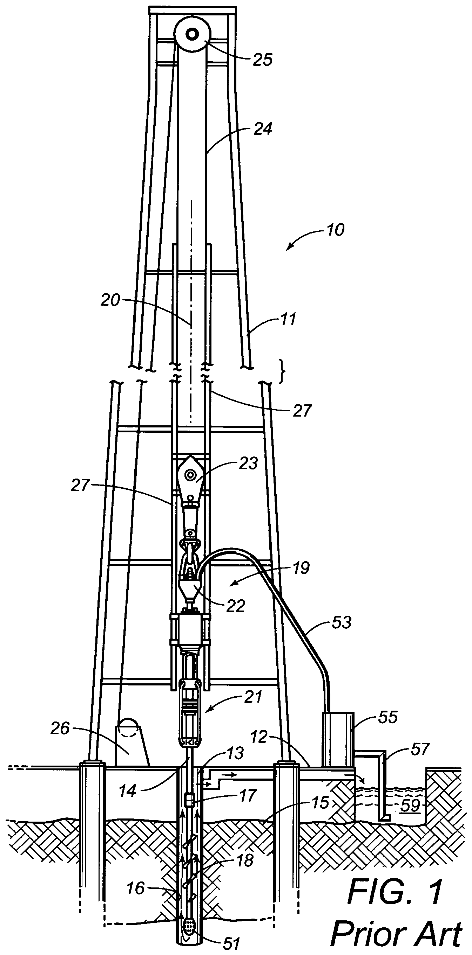

FIGURE 1 shows a conventional drilling rig 10 that utilizes a prior art mud pump 55. The mud pump 55 is mounted to the rig floor 12 near the oil derrick 11. The mud pump 55 has an inlet line 57 and an outlet line 53. The inlet line 57 connects the mud pump 55 with the mud pit 59, where the mud is stored for use. The outlet line 53 is appropriately connected to the drilling unit 19 so as to pump pressurized mud into the drillstring 14. The mud travels within the drillstring 14 downwardly to the drill bit 51, which rotates within the wellbore 16. The mud exits the drillstring 14 near the drill bit 51 and is forced by pressure up to well floor 12. The mud recycles back to the mud pit 59 through line 61. Mud is continuously pumped in this fashion during drilling operations.

A drawworks 26 extends a wire line 24 around the pulley 25 so as to raise and lower drill pipe 14 from and to the wellbore 16. The pulley 25 is also known as a crown block. The wellbore 16 is formed in the earth 50. The drill pipe 14 can be a drillstring that is a series of drill pipes extending within the wellbore 16 in the earth 15. Individual drill pipe 14 is connected to the drillstring at threaded joint 17. Portions of the drillstring may have stabilizer portions that include stabilizer elements 18 that extend helically along the outer surface of the pipe 14 so as to engage the wall of the wellbore 16 in a manner that centers the pipe 14 therein.

The drawworks 26 extends and retracts wire line 24 over the pulley 25 that is mounted on the oil derrick 11 so as to raise and lower the drilling unit 19 that holds the drill pipe 14. The line 24 is connected to traveling block 23. The traveling block 23 is suspended and moved upwardly and downwardly by the line 24 which is extended and retracted by the drawworks 26. The traveling block 23 is connected to the drilling unit 19. The drilling unit 19 has a swivel 22 at its upper end to which drilling fluid is introduced into the drill pipe 14, and by which the drilling unit 19 is suspended from the traveling block 23. The drilling unit 19, pipe handler 21, and the associated connected parts move vertically along axis 20. The vertical movement is guided by two vertical guide rails, or tracks, 27 that are rigidly attached to the derrick 11. The drilling unit 19 is attached to a carriage 28. The carriage 28 has rollers that engage the rails 27. The rails 27 guide the carriage 28 for vertical movement upwardly and downwardly along the rails 27 parallel to vertical axis 20. The drill pipe 14 is inserted into and removed from the wellbore 16 through the wellhead 13.

A problem associated with mud pumps is that the pulsations of the pistons in the cylinders of the pump head create negative harmonics. These negative harmonics can affect the pumping efficiency between the power source and the pump head. Thus, the efficiency and effectiveness of the mud pump is affected when negative harmonics are present. When mud pumps operate less efficiently than expected, less mud is pumped per unit of power used, thus, negative harmonics cause increased costs of power consumption and increased wear on the power source (e.g. motor) of the mud pump. As such, there is a need to mitigate negative harmonics associated with mud pumps.

Another problem associated with mud pumps is that correcting the associated equipment so as to alleviate negative harmonics requires changing the speed of the mud pump, whether it is speeding the pump or slowing the pump to a stop so as to make various adjustments in the mud pump. The speed of the pump head is controlled by the speed of the power source. Prior art power sources (motors) have strong inertial forces that make them hard to quickly increase or decrease in speed. Moreover, to change the speed as quickly as possible in prior art motors, much energy is needed. Furthermore, it common for mud pumps to have complex transmissions that couple the pump head to the motor and create further resistance to quick changes in speed. Thus, there is a need for a power source that allows for quick real-time change in speed of the power source so as to quickly remove the negative harmonics from the mud pump.

In the past, various patents have issued relating to mud pumps. For example, U.S. Patent Publication No. 2007/0261888, published on November 15, 2007 to Urquhart, discloses a system for pumping fluid (e.g., but not limited to, drilling fluid) that has a pump apparatus with a pumping section and a motor section. The pumping section has an inlet and an outlet. The motor section has a shaft for reciprocating in and out of the pumping section to alternately suck fluid into the inlet, and pump fluid out the outlet. The motor is a permanent magnet linear motor for moving the shaft in a reciprocating motion.

U.S. Patent No. 5,375,098, issued on December 20, 1994 to Malone et al., discloses a LWD tool that has a stator, a rotor which rotates relative to the stator thereby effecting a signal in the borehole fluid flowing therethrough, a brushless DC motor coupled to the rotor for driving the rotor, a position sensor coupled to the motor for sensing the rotational position of the motor, motor drive electronics coupled to the motor for driving the motor, and a microprocessor coupled to the position sensor and to the drive electronics for controlling the drive signals to the motor based on the actual and desired positions of the motor. By controlling the drive signal to the motor, the speed of the motor is controlled, thus effecting changes in frequency and/or phase of the signal in the borehole fluid or mud. With the ability to change the frequency and/or phase, different encoding techniques such as PSK-type and FSK-type can be used.

U.S. Patent No. 5,306,124, issued on April 26,1994 to Back, discloses a mud pump assembly that has a housing with a motor-mounting face directly connected to a standard hydraulic drive motor. The pump housing supports, and partially encloses, a bearing assembly which supports the pump impeller shaft. A face-type impeller-shaft seal is located between the bearing assembly and the impeller. The motor case completes enclosure of the impeller-shaft bearing assembly. A motor case drain line is coupled to the mud pump housing for continuous pressure lubrication of the bearing assembly. In one embodiment, case drain fluid is returned from the mud pump housing to the hydraulic fluid reservoir for the hydraulic motor.

U.S. Patent No. 5,259,731, issued on November 9, 1993 to Dhindsa et al., discloses a system for pumping a fluid into a common pressure outlet. The system has reciprocating pumps. A separate sensor coupled to one cylinder of each pump provides an electrical signal each time the piston in that cylinder is at a predetermined position. A speed control circuit is provided to independently adjust the speed of each pump. Manual speed control for each pump is provided through a separate throttle for each pump. A pump control circuit coupled to each of the throttles, sensors and speed control circuit controls the operation of the system.

U.S. Patent No. 4,242,057, issued on December 30, 1980 to Bender, discloses a mud pump for oil well servicing on drilling rigs that includes a pair of parallel, reciprocating piston-cylinder, motor-pump combinations. The motor-pump combinations are oppositely arranged so that one is pumping while the other is charging. Motor reversal is accomplished through a hydraulically actuated spool valve which is slaved to the common piston rods of the respective, tandem motor-pump combinations. The hydraulically actuated spool valve is hydraulically slaved to the motors to effect motor reversal. A unique floating stuffing box is provided on the motor side of each combination which accommodates lateral rod shifting while maintaining a fluid tight seal.

U.S. Patent No. 5,146,433, issued on September 8, 1992 to Kosmala et al., discloses a method for recovering a LWD or MWD data signal in the presence of mud pump noise. The method includes the steps of calibrating the drilling mud pressure as a function of the mud pump piston position, tracking the piston position during transmission of the LWD or MWD data signal, and using the calibration information to subtract out the mud pump noise. Calibration is accomplished in the absence of the LWD or MWD data signal to provide a correlation between mud pump piston position and the drilling mud pressure. When the LWD or MWD data signal is generated, the mud-pump piston position is tracked such that the pressure due to the pump can be subtracted and the LWD or MWD signal recovered.

U.S. Patent No. 5,616,009, issued on April 1, 1997 to Birdwell, discloses a multi-cylinder, double acting mud pump. The mud pump has a hydraulically powered piston in a cylinder which connects with a piston rod. The rod drives a second piston in a cylinder adapted to pump mud. The first piston is driven by hydraulic oil delivered under pressure to intake manifolds through an independently driven valving apparatus which times the delivery of the hydraulic fluid for the main power stroke and further times the discharge of the hydraulic fluid for the return secondary power stroke. A valve system independently controls the pump by timing multiple pistons in multiple cylinders. Additionally, an intake valve delivers fluid mud at lower pressure on the intake side of the mud compression piston, and an outlet valve transverses with the piston rod to direct the outlet mud flow.

U.S. Patent No. 4,527,959, issued on July 9, 1985 to Whiteman, discloses a pump for circulating drilling fluid into a well during drilling. The pump has a pair of double-ended piston assemblies that hydraulically reciprocate in opposite directions by a common hydraulic drive arrangement. Each piston assembly has a relatively large piston at one end and a relatively small piston at an opposite end. The various pistons reciprocate within appropriately sized cylinders. Each cylinder has a working end with a one-way intake valve through which drilling fluid is drawn from a supply tank and a one-way discharge valve through which drilling fluid is discharged to the well. Furthermore, document US 2008/0181798 A1 discloses an apparatus and a method for powering a fluid pump used in connection with drilling operations.

It is an object of the present invention to provide a direct-drive mud pump.

It is another object of the present invention to provide a mud pump that has reduced inertial effects.

It is another object of the present invention to provide a mud pump where the pump head is directly driven by the motor.

It is another object of the present invention to provide a mud pump that uses a permanent magnet in the motor.

It is a further object of the present invention to provide a mud pump that requires no gearing mechanism.

It is another object of the present invention to provide a mud pump that has a very high power density.

It is yet another object of the present invention to provide a mud pump that has a relatively light weight.

It is still another object of the present invention to provide a mud pump that can be easily transported on conventional road systems.

It is another object of the present invention to provide a mud pump which requires no assembly besides installation in the oil field.

It is another object of the present invention to provide a mud pump that is easily replaceable in the oil field.

It is another object of the present invention to provide a mud pump that reduces costs of operating and repair.

These and other objects and advantages of the present invention will become apparent from a reading of the attached specification and appended claims.

### BRIEF SUMMARY OF THE INVENTION

The present invention is a permanent magnet direct drive mud pump comprising a permanent magnet motor, a shaft connected to the permanent magnet motor, and a pump head connected to the end of the shaft opposite the permanent magnet motor. The permanent magnet motor comprises a housing, a stator positioned within the housing, and a rotor cooperative with the stator and positioned interior of the stator within the housing. The rotor is interconnectable with the shaft so that the rotational motion imparted by the permanent magnet motor can be directly imparted to the shaft, and accordingly to the pump head.

The housing comprises an interior chamber surrounded by a wall. The stator is positioned adjacent to the wall of the housing. The stator has a plurality of windings extending therearound. The windings are maintained in spaced relationship around an inner surface of the stator. The windings extend radially inwardly from the wall of the housing. Suitable air flow passageways are provided throughout the housing so as to enhance the cooling effect of air exchange with the stator.

A rotor is positioned interior of the stator. The rotor is an annular member. Permanent magnets are located in spaced relationship to one another around a periphery of the rotor. The permanent magnets are cooperative with the windings so as to provide the motor-effect of the permanent magnet motor. A drive plate is affixed to the rotor. The drive plate has an interior aperture suitably formed to engage the spline of the associated shaft. The drive plate of the rotor receives the shaft. As such, when rotational forces are imparted to the rotor, the rotational forces are directly imparted to the shaft and to the associated pump head. As such, the present invention is able to directly rotate the shaft without the need for gearing mechanisms or transmission systems.

### BRIEF DESCRIPTION OF THE DRAWINGS

FIGURE 1 shows a side elevational view of an oil rig utilizing a prior art mud pump.
FIGURE 2 shows a side elevational view of the preferred embodiment of the permanent magnet direct drive mud pump of the present invention.
FIGURE 3 shows a side elevational view of a pump head used with the mud pump of the present invention.
FIGURE 4 shows a cross-sectional view of the permanent magnet motor of the present invention.
FIGURE 5 shows a plan view of the drive plate associated with the permanent magnet motor of the present invention.
FIGURE 6 shows a perspective view of the rotor of the permanent magnet motor of the present invention.
FIGURE 7 shows a perspective view of the stator of the permanent magnet motor of the present invention.

### DETAILED DESCRIPTION OF THE INVENTION

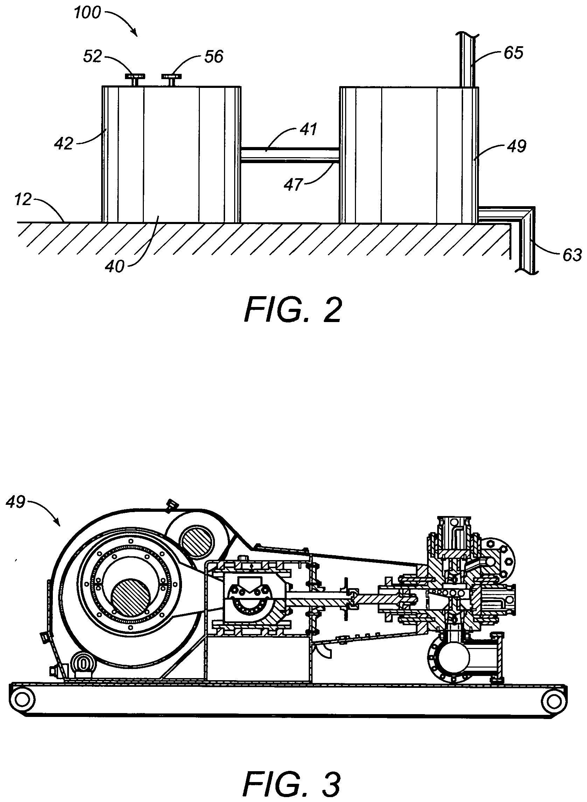

Referring to FIGURE 2, there is shown a side elevational view of the preferred embodiment of the permanent magnet direct drive mud pump 100 of the present invention. The mud pump 100 has a permanent magnet motor 40. A shaft 41 is connected to the permanent magnet motor 40. A pump head 49 is attached to the end 47 of the shaft 41 opposite the permanent magnet motor 40. The permanent magnet motor 40 rotates the shaft 41 which rotates appropriate parts in the pump head 49. The shaft 41 extends into the interior of the motor 40. The rotation of the pump head 49 causes mud to be sucked into the pump head 49 through inlet line 63, pressurized in the pump head 49, and discharged under pressure from the pump head 49 through the discharge line 65. A longitudinal axis of a crankshaft in the pump head 49 is aligned with a longitudinal axis of the shaft 41. The longitudinal axes are generally parallel to the rig floor 12. The permanent magnet motor 40 rests on the rig floor 12. The permanent magnet motor 40 has a housing 42. A rotor and stator are located within the housing 42. The housing 42 has a generally cylindrical shape. The shaft 41 extends outwardly of the interior of the permanent magnet motor 40. Cooling air inlet 52 delivers cooling air to the rotor and stator that are located within the interior of the housing 42. The air circulates within the interior of the housing 42 around the rotor and stator so as to cool the rotor and stator. Heated air leaves the housing 42 through discharge port 56. The discharge port 56 allows for the discharge of heated air from the interior of the housing 42.

Referring to FIGURE 3, there is shown a side elevational view of a preferred pump head 49 of the present invention. The pump head 49 has a power end and a fluid end. The power end has a crankshaft. The crankshaft is connected to the shaft 41, which is connected to permanent magnet motor 40. The motor 40 turns shaft 41, which turns the crankshaft. The crankshaft imparts power through several gears, i.e. the main gear and the lubrication pump gear, to the piston rod. The piston rod oscillates through a chamber so as to suck mud into the suction manifold. The piston creates a pressure in the manifold so that mud is discharged under pressure through the discharge manifold. The shaft 41 directly drives the crankshaft. The crankshaft is assembled through the top of the frame of the pump head 49. Assembly in this way is much faster and less complex.

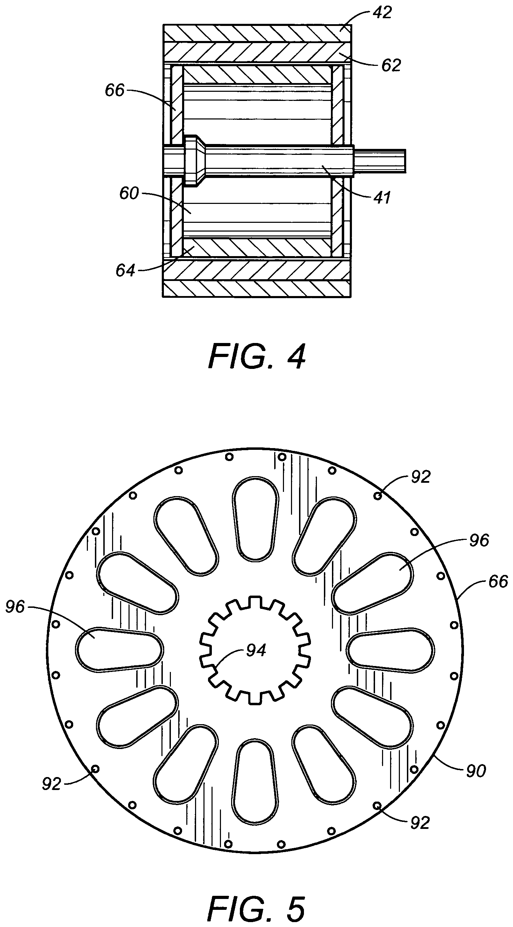

Referring to FIGURE 4, there is shown a cross-sectional view of the housing 42 of the permanent magnet motor 40. As can be seen, the housing 42 defines an interior chamber 60. A stator 62 is affixed to the wall of the housing 42. The stator 62 extends around the circular interior of the housing 42. A rotor 64 is positioned in close proximity to the stator 62. Rotor 64 has a plurality of permanent magnets formed around a periphery thereof (described in more detail below). The stator 62 has coils of wire positioned around the inner surface of the stator 62. The interaction of the coils of the stator 62 and the permanent magnets of the rotor 64 provides the rotational power of the permanent magnet motor 40. A drive plate 66 is affixed to the top of the rotor 64. The shaft 41 is engaged with the drive plate 66 so that the rotational energy imparted to drive plate 66 by the rotor 64 will be imparted to the shaft 41. The shaft 41 extends outwardly from the interior chamber 60 of the housing 42.

Permanent magnet motors rotate because of the torque that the interaction of two magnet fields causes. These magnetic fields are created by the permanent magnets mounted on the rotating rotor and the magnetic field that the stationary windings of the stator induce. The torque is greatest when the magnetic vector of the rotor is at a 90 degree angle to the magnetic vector of the stator. In this position, it forces the poles of the rotor to rotate in the direction of the stator field. In a trapezoidally-driven brushless-DC motor, a current flow alternating sequentially through two of the three coils generates the stator field. The remaining third coil monitors the back EMF (electromotive force) of the two active coils. Back EMF occurs when a permanent magnet motor rotates. Each winding generates a voltage that opposes the main voltage of the windings. Back EMF depends on the angular velocity of the rotor, the magnetic field that the rotor magnets generate, and the number of turns in the stator windings. The motor's back EMF provides the feedback of the rotor's position with respect to the stator windings. Permanent magnet motors having sensors provide a similar position feedback. With sinusoidal commutation, which permanent magnet synchronous motor use, the drive-control circuitry simultaneously powers the three coils.

Permanent magnet motors have been commercially available since the 1990's. However, permanent magnet motors have not seen wide spread use because of the high cost associated with the expensive permanent magnets on the rotor. Additionally, their complex control algorithms require specialized engineering expertise as well as the additional expense of an embedded processor. Permanent magnet motors are more efficient than the AC-induction motors. However, because of the recent rise in the price of copper, the current winding-based induction motors have become more costly and the permanent magnet motors have become comparatively less expensive. Additionally, recent advances in technology have improved the power output of permanent magnet motors to where such motors have a superior power density to that of existing induction motors. As such, the permanent magnet motor 40, as illustrated in FIGURE 4, provides superior power output for the direct drive of the shaft 41 and drum 43 of the mud pump 100.

Referring to FIGURE 5, there is shown a plan view of the drive plate 66 of the permanent magnet motor 40 of the mud pump 100 of the present invention. The drive plate 66 has a circular shape with the an outer periphery 90. Bolt holes 92 are formed adjacent to the outer periphery 90. The bolt holes 92 allow for the bolted attachment of the drive plate 66 of the top of the rotor. A splined aperture 94 is formed centrally of the drive plate 66 so as to accommodate the spline of the shaft 41. Air circulation holes 96 are formed around the interior of the drive plate 66. The holes 96 facilitate air circulation within the permanent magnet motor 40.

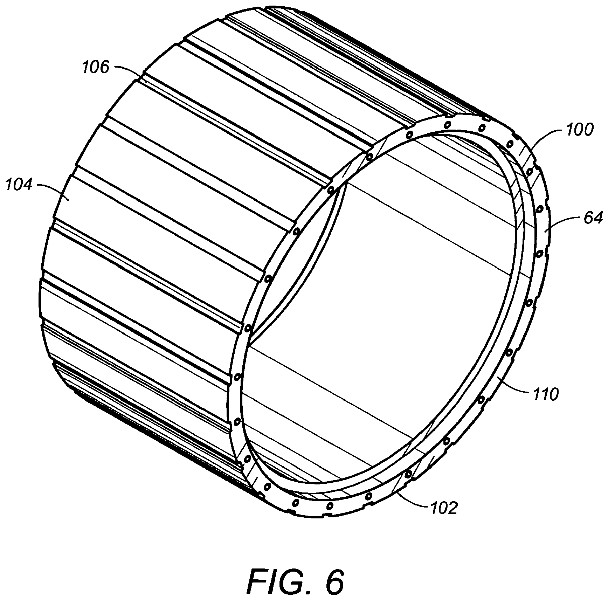

Referring to FIGURE 6, there is shown a isolated perspective view of the rotor 64 of the permanent magnet motor 40 of the mud pump 100 of the present invention. The drive plate 66 can be mounted directly onto the top of the rotor 64. Permanent magnet piles 104 are affixed to the outer surface 102 of the rotor 64 in spaced relationship to each other. Spacers 106 serve to isolate one of the permanent magnet piles from an adjacent pile. Spacers 106 can be separate items or they can be simply a formed surface on the outer periphery on the rotor 64. The rotor 64 has a rotor bearing bore 110 formed centrally thereof.

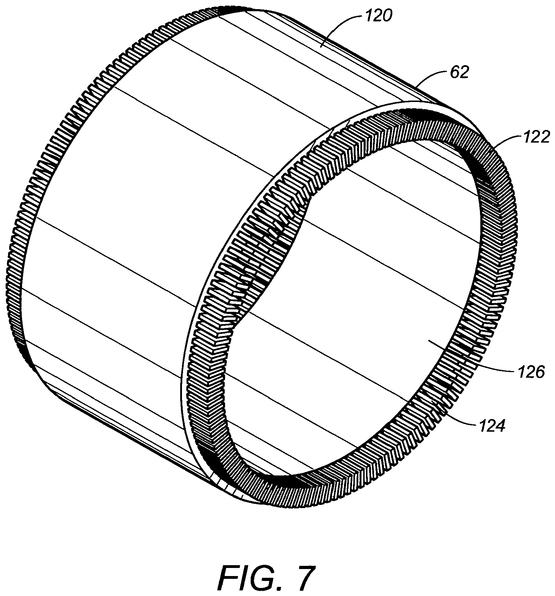

Referring to FIGURE 7, there is shown a isolated perspective view of the stator 62 of the permanent magnet motor 40 of the mud pump 100 of the present invention. The stator 62 has an outer cover 120 which serves to space the coils 122 from the inner wall of the housing 42. The coils 122 extend radially inwardly therefrom. The interior surface 124 of the coils 122 define a circular aperture into which the rotor 64 is placed. As a result, the permanent magnet piles 104 are in close proximity to the coils 122 so that the permanent magnet motor 40 can operate properly. Suitable electronics are connected to the permanent magnet motor 40 so as to facilitate the proper operation of the permanent magnet motor 40.

In the present invention, it will be appreciated that the permanent magnet direct drive mud pump 100 is directly connected to the shaft 41. As such, there are no gears or other transmission mechanisms that are interconnected in these areas. The mud pump 100 thus provides an enhanced power density for the proper rotation of the drillstring in a relatively lightweight configuration. The weight associated with transmission systems is effectively avoided by the present invention. Furthermore, the complexity of installing such transmission systems so that the power of the induction motor can be transmitted to the drive system is avoided in the present invention. As a result, the permanent magnet direct drive mud pump of the present invention can serve the proper purpose of rotating the pump head 49 with a minimal weight. Unlike the present motors associated with drilling operations that can weigh in excess of 45,36 tonnes (100,000 pounds), the permanent magnet motor 40 of the present invention will only weigh approximatel 27,22 tonnes (60,000 pounds). As such, it can be easily transported over roads on a conventional truck. Unlike the prior art, the motor 40 does not have to be assembled in itself or with the transmission system in the field. As such, the present invention avoids the specialized requirement of installation personnel that would be otherwise required for those systems that require transmissions between the motor 40 and the pump head 49. The reduced weight of the permanent magnet motor 40 of the present invention avoids certain inertial effects that would otherwise adversely affect the operation of conventional induction motors. The motor 40 of the present invention can be interchanged, as desired, for use in association with the mud pump 100 or the drawworks 26 of the drilling rig. Since transmission systems are not required, a supply of such permanent magnet motors 40 can be provided to the drilling operation for use either in association with a mud pump or for other purposes. If there would be a failure of any one motor 40, then any of the other motors could be substituted therefore without any downtime on the drilling rig.

Directly driving the pump head 49 with the motor 40 coupled directly to the crankshaft eliminates internal and external gear reduction. Internal gear reduction usually involves a pinion gear and a bull gear. A main gear is mounted directly onto the crankshaft and the pinion gear is mounted to the pump frame. The external gear reduction is typically achieved by using a chain and sprocket drive system or a sheave and belt system. In a chain-driven pump, the small sprocket is directly mounted to the motor and the larger driven sprocket is mounted to the pinion gear shaft. In belt-driven pumps, the small sheave is directly mounted to the motor and the larger driven sheave is mounted to the pinion gear shaft. The present invention eliminates the use of these components. By eliminating these components, the drive is simplified by reducing the moving parts in the power transmission by more than 50 %. This reduces the need for maintenance and overall product life-cycle cost.

The present invention contemplates that motor 40 includes multiple permanent magnet motors.

The foregoing disclosure and description of the invention is illustrative and explanatory thereof. Various changes in the details of the illustrated construction can be made within the scope of the present invention as defined by the following claims.

## Claims

1. A direct drive mud pump comprising:
a permanent magnet motor,
a shaft (41) connected to said permanent magnet motor; and
a pump head connected to an end of said shaft opposite said permanent magnet motor,
wherein said permanent magnet motor comprises
a rotor (64) cooperative with a stator (62)
**characterized in that**
said permanent magnet motor comprises
a housing (42) comprising an interior chamber (60) and a wall surrounding said interior chamber, the stator being positioned adjacent said wall of said housing;
said stator positioned within said housing, said stator having a plurality of windings (122) and an outer cover (120), said plurality of windings being in spaced relationship around an inner surface of said outer cover (120), the interior surface of the windings defining a cylindrical aperture, said windings extending radially inwardly from said outer cover, the outer cover forming a spaced relationship between said plurality of windings and said wall; wherein
the rotor is positioned interior of said stator within said housing.

2. The direct drive mud pump of Claim 1, said rotor (64) being an annular member.

3. The direct drive mud pump of Claim 2, said rotor (64) having a plurality of permanent magnets (104) in spaced relationship around an outer periphery of said rotor, said permanent magnets being cooperative with windings positioned on said stator.

4. The direct drive mud pump of Claim 1, said rotor (64) being interconnectable with said shaft such that the rotational motion imparted by said permanent magnet motor is directly imparted to said shaft (41).

5. The direct drive mud pump of Claim 1, said housing (42) having at least two air flow passageways, one of said at least two air flow passageways being suitable for allowing ambient temperature air to enter into said housing, the other of said at least two air flow passageways being suitable for allowing heated air to exit said housing.

6. The direct drive mud pump of Claim 1, further comprising:
a drive plate (66) affixed to said rotor.

7. The direct drive mud pump of Claim 6, said drive plate (66) having a splined interior aperture (94) suitable for engaging a spline formed on said shaft.

8. The direct drive pump of claim 5, wherein said drive plate comprises a plurality of bolt holes (92) adjacent to the outer periphery.

9. The direct drive pump of claim 5, wherein said drive plate comprises a plurality of air circulation holes (96) around the interior of said drive plate (66).

10. The direct drive pump of claim 1, wherein said plurality of windings (122) define an inner aperture into which said rotor (64) is positioned.

11. The direct drive pump of claim 1, further comprising spacers, wherein said spacers (106) are located to form the spaced relationship between the plurality of permanent magnets (104).

12. The direct drive pump of claim 1, wherein the stator (62) is affixed to the wall of the housing (42).

13. The direct drive pump of claim 1, wherein the stator (62) extends around a circular interior of the housing (42) and is affixed thereto.

14. The direct drive pump of claim 1, wherein an interior surface of the plurality of windings (122) define a circular aperture into which the rotor (64) is positioned.

## Patentansprüche

1. Eine direkt angetriebene Schlammpumpe aufweisend:
einen Permanentmagnetmotor,
eine Welle (41), welche mit dem Permanentmagnetmotor verbunden ist; und
einen Pumpenkopf, welcher mit einem Ende der Welle gegenüber dem Permanentmagnetmotor verbunden ist,
wobei der Permanentmagnetmotor aufweist einen Rotor (64) zusammenwirkend mit einem Stator (62),
**dadurch gekennzeichnet, dass**
der Permanentmagnetmotor aufweist
ein Gehäuse (42) aufweisend einen Innenraum (60) und eine Wand, welche den Innenraum umschließt, den Stator, welcher benachbart zu der Wand des Gehäuses positioniert ist;
den Stator, welcher in dem Gehäuse positioniert ist, den Stator, welcher eine Vielzahl von Wicklungen (122) und eine äußere Abdeckung (120) hat, die Vielzahl von Wicklungen, welche in beabstandeter Beziehung um eine innere Oberfläche der äußeren Abdeckung (120) stehen, die innere Oberfläche der Wicklungen, welche eine zylindrische Öffnung definiert, die Wicklungen, welche sich radial einwärts von der äußeren Abdeckung erstrecken, die äußere Abdeckung, welche eine beabstandete Beziehung zwischen der Vielzahl von Wicklungen und der Wand formt; wobei
der Rotor innerhalb des Stators innerhalb des Gehäuses positioniert ist.

2. Die direkt angetriebene Schlammpumpe gemäß Anspruch 1, wobei der Rotor (64) ein ringförmiges Element ist.

3. Die direkt angetriebene Schlammpumpe gemäß Anspruch 2, wobei der Rotor (64) eine Vielzahl von Permanentmagneten (104) hat, welche in beabstandeter Beziehung um einen Außenumfang des Rotors stehen, die Permanentmagnete zusammenwirkend mit Wicklungen sind, welche in dem Stator positioniert sind.

4. Die direkt angetriebene Schlammpumpe gemäß Anspruch 1, wobei der Rotor (64) mit der Welle derart verbindbar ist, dass die Drehbewegung, welche von dem Permanentmagnetmotor aufgeprägt wird, direkt auf die Welle (41) aufgeprägt wird.

5. Die direkt angetriebene Schlammpumpe gemäß Anspruch 1, wobei das Gehäuse (42) mindestens zwei Luftströmungsgänge hat, einer der mindestens zwei Luftströmungsgänge geeignet ist, um Luft mit Umgebungstemperatur zu erlauben, in das Gehäuse einzudringen, der andere der mindestens zwei Luftströmungsgänge geeignet ist, um geheizter Luft zu erlauben, aus dem Gehäuse auszutreten.

6. Die direkt angetriebene Schlammpumpe gemäß Anspruch 1, des Weiteren aufweisend:
eine Antriebsscheibe (66), welche an dem Rotor angebracht ist.

7. Die direkt angetriebene Schlammpumpe gemäß Anspruch 6, wobei die Antriebsscheibe (66) eine, mit Zähnen versehene, innere Öffnung (94) hat, welche geeignet ist, um in einen Zahn einzugreifen, welcher auf der Welle geformt ist.

8. Die direkt angetriebene Pumpe gemäß Anspruch 5, wobei die Antriebsscheibe eine Vielzahl von Schraublöchern (92) aufweist, welche benachbart zu dem Außenumfang sind.

9. Die direkt angetriebene Pumpe gemäß Anspruch 5, wobei die Antriebsscheibe eine Vielzahl von Luftzirkulationslöchern (96) um das Innere der Antriebsscheibe (66) herum aufweist.

10. Die direkt angetriebene Pumpe gemäß Anspruch 1, wobei die Vielzahl von Wicklungen (122) eine innere Öffnung definieren, in welcher der Rotor (64) positioniert ist.

11. Die direkt angetriebene Pumpe gemäß Anspruch 1, des Weiteren aufweisend Abstandshalter, wobei die Abstandshalter (106) derart gelegen sind, um die beabstandete Beziehung zwischen der Vielzahl von Permanentmagneten (104) zu formen.

12. Die direkt angetriebene Pumpe gemäß Anspruch 1, wobei der Stator (62) an der Wand des Gehäuses (42) angebracht ist.

13. Die direkt angetriebene Pumpe gemäß Anspruch 1, wobei der Stator (62) sich um einen kreisförmigen Innenraum des Gehäuses (42) herum erstreckt und daran angebracht ist.

14. Die direkt angetriebene Pumpe gemäß Anspruch 1, wobei eine innere Oberfläche der Vielzahl von Wicklungen (122) eine kreisförmige Öffnung definiert, in welcher der Rotor (64) positioniert ist.

## Revendications

1. Pompe à boue à entraînement direct comprenant :
un moteur à aimant permanent,
un arbre (41) couplé audit moteur à aimant permanent ; et
une tête de pompe couplée à une extrémité dudit arbre, opposée audit moteur à aimant permanent, dans laquelle ledit moteur à aimant permanent comprend :
un rotor (64) coopérant avec un stator (62),
**caractérisée en ce que**
ledit moteur à aimant permanent comprend :
un logement (42) comprenant une chambre intérieure (60) et une paroi entourant ladite chambre intérieure, le stator étant positionné de manière adjacente à ladite paroi dudit logement ;
ledit stator étant positionné à l'intérieur dudit logement, ledit stator comportant une pluralité d'enroulements (122) et un revêtement externe (120), les enroulements de ladite pluralité d'enroulements étant en relation espacée autour d'une surface interne dudit revêtement externe (120), la surface intérieure des enroulements définissant une ouverture cylindrique, lesdits enroulements s'étendant radialement vers l'intérieur à partir dudit revêtement externe, le revêtement externe présentant une relation espacée entre ladite pluralité d'enroulements et ladite paroi ; dans laquelle
le rotor est positionné à l'intérieur dudit stator dans ledit logement.

2. Pompe à boue à entraînement direct selon la revendication 1, ledit rotor (64) étant un élément annulaire.

3. Pompe à boue à entraînement direct selon la revendication 2, ledit rotor (64) comportant une pluralité d'aimants permanents (104) en relation espacée autour d'une périphérie externe dudit rotor, lesdits aimants permanents coopérant avec des enroulements positionnés sur ledit stator.

4. Pompe à boue à entraînement direct selon la revendication 1, ledit rotor (64) pouvant être couplé audit arbre de telle sorte que le mouvement de rotation communiqué par ledit moteur à aimant permanent est communiqué directement audit arbre (41).

5. Pompe à boue à entraînement direct selon la revendication 1, ledit logement (42) comportant au moins deux voies de passage d'écoulement d'air, l'une desdites au moins deux voies de passage d'écoulement d'air étant adaptée de manière à permettre l'entrée de l'air à la température ambiante dans ledit logement, l'autre desdites au moins deux voies de passage d'écoulement d'air étant adaptée de manière à permettre la sortie de l'air chauffé hors dudit logement.

6. Pompe à boue à entraînement direct selon la revendication 1, comprenant en outre :
une plaque d'entraînement (66) fixée sur ledit rotor.

7. Pompe à boue à entraînement direct selon la revendication 6, ladite plaque d'entraînement (66) comportant une ouverture intérieure cannelée (94) appropriée de manière à se coupler à une cannelure formée sur ledit arbre.

8. Pompe à entraînement direct selon la revendication 5, dans laquelle ladite plaque d'entraînement comprend une pluralité d'orifices de vis (92) adjacents à la périphérie externe.

9. Pompe à entraînement direct selon la revendication 5, dans laquelle ladite plaque d'entraînement comprend une pluralité d'orifices de circulation d'air (96) autour de la partie intérieure de ladite plaque d'entraînement (66).

10. Pompe à entraînement direct selon la revendication 1, dans laquelle ladite pluralité d'enroulements (122) définit une ouverture interne dans laquelle ledit rotor (64) est positionné.

11. Pompe à entraînement direct selon la revendication 1, comprenant en outre des entretoises, dans laquelle lesdites entretoises (106) sont agencées de manière à présenter la relation espacée entre les aimants de la pluralité d'aimants permanents (104).

12. Pompe à entraînement direct selon la revendication 1, dans laquelle le stator (62) est fixé sur la paroi du logement (42).

13. Pompe à entraînement direct selon la revendication 1, dans laquelle le stator (62) s'étend autour d'une partie intérieure circulaire du logement (42) et est fixé sur cette dernière.

14. Pompe à entraînement direct selon la revendication 1, dans laquelle une surface intérieure de la pluralité d'enroulements (122) définit une ouverture circulaire dans laquelle le rotor (64) est positionné.
